# EUROPÄISCHE PATENTANMELDUNG

(11) **EP 2 786 920 A1**
(43) Veröffentlichungstag der Anmeldung: **08.10.2014**
(21) Anmeldenummer: 13170282.1
(22) Anmeldetag: 03.06.2013
(51) Int. Cl.: B62D 27/02, B62D 25/04, B62D 29/00, B62D 25/02, B62D 27/06

(54) **Tragstruktur eines Kraftfahrzeuges und Verfahren zu dessen Herstellung**

(30) Priorität: 04.04.2013 EP 13162270
(71) Anmelder: MAGNA STEYR Engineering AG & Co KG, 8041 Graz (AT)
(72) Erfinder: Ehrlich, Philipp, 8042 Graz (AT); Erlacher, Manuel, 9545 Radenthein (AT); Hofer, Bernhard, 8053 Graz (AT); Hörmann, Reinhard, 8151 Hitzendorf (AT); Maier, Stefan, 9473 Lavamünd (AT); Planka, Franz, 9433 St. Andrä (AT); Rucker, Michael, 8504 Preding (AT); Rud, Stefan, 8041 Graz (AT); Spary, Anton, 8041 Graz (AT); Zchnegger, Harald, 8041 Graz (AT)
(74) Vertreter: Rausch, Gabriele

(57) **Zusammenfassung**

Eine Tragstruktur eines Kraftfahrzeuges umfassend Hohlprofile (1) und Knotenelemente (2), wobei die Knotenelemente (2) zur Verbindung der Hohlprofile (1) eingerichtet sind, wobei die Hohlprofile (1) in Aufnahmen (3) der Knotenelemente (2) befestigt sind, wobei die Knotenelemente (2) Strangpress- oder Fließpress- oder Strangziehteile sind, mit jeweils einer Vielzahl von flächigen Stegen (4) in Fahrzeughochrichtung (z), wobei zumindest einige der flächigen Stege (4) eine Fachwerkstruktur ausbilden, die den Lastpfad (5) im jeweiligen Knotenelement (2) unterstützt.

## Beschreibung

### Gebiet der Erfindung

Die vorliegende Erfindung betrifft eine Tragstruktur eines Kraftfahrzeuges umfassend Hohlprofile und Knotenelemente, wobei die Knotenelemente zur Verbindung der Hohlprofile eingerichtet sind und ein Verfahren zur Herstellung einer derartigen Tragstruktur.

### Stand der Technik

Derartige Tragstrukturen werden insbesondere in der sogenannten "Space-Frame" Bauweise von Karosserien für Kraftfahrzeuge eingesetzt.

Eine Tragstruktur aus Leichtmetall-Gussknoten und/oder Kunststoffknoten und diese verbindenden Leichtmetall-Strangprofile und/oder Kunststoffprofilen ist beispielsweise aus der EP 0 900 716 A1 bekannt.

Die EP 0 146 716 A2 offenbart einen Wagenkasten, insbesondere für Personenkraftwagen, welcher als tragende Konstruktion mittels Knotenelemente zusammengefügte Rohrstücke umfasst, wobei die Rohrstücke aus Leichtmetall hergestellte Strangpressprofile sind, die Knotenelemente gleichfalls aus Leichtmetall bestehen und die Enden der Strangpressprofile durch ihre Querschnittsform formschlüssig in entsprechenden Aufnahmen in den Knotenelementen gehalten sind.

### Zusammenfassung der Erfindung

Es ist eine Aufgabe der Erfindung, Tragstrukturen von Kraftfahrzeugen zu verbessern, und insbesondere eine Tragstruktur anzugeben die einfach und kostengünstig herstellbar ist, geringes Gewicht aufweist und dabei eine hohe Tragfähigkeit gewährleistet.

Die Lösung der Aufgabe erfolgt durch eine Tragstruktur eines Kraftfahrzeuges umfassend Hohlprofile und Knotenelemente, wobei die Knotenelemente zur Verbindung der Hohlprofile eingerichtet sind, wobei die Hohlprofile in Aufnahmen der Knotenelemente befestigt sind, wobei die Knotenelemente Strangpress- oder Fließpress- oder Strangziehteile sind, mit jeweils einer Vielzahl von flächigen Stegen in Fahrzeughochrichtung, wobei zumindest einige der flächigen Stege eine Fachwerkstruktur ausbilden, die den Lastpfad im jeweiligen Knotenelement unterstützt.

Erfindungsgemäß sind demnach die Knotenelemente durch die an sich bekannten Verfahren Strangpressen, Fließpressen oder Strangziehen (Pultrusion) hergestellt und weisen dementsprechend eine Form auf, die mit diesen Mitteln herstellbar ist, nämlich die eines Profils aus flächigen Stegen die in einer gemeinsamen Press- bzw. Ziehrichtung ausgerichtet sind. Dabei werden erfindungsgemäß auch äußere Begrenzungen der Knotenelemente zu den flächigen Stegen gezählt, die das jeweilige Knotenelement bilden.

Erfindungsgemäß sind die, durch Strangpressen, Fließpressen oder Strangziehen entstanden flächigen Stege der Knotenelemente in einem Kraftfahrzeug in Fahrzeughochrichtung ausgerichtet, wobei eine Anzahl von derartigen flächigen Stegen so angeordnet ist, dass sie gemeinsam eine Struktur nach der Art eines Fachwerkes bilden. Das Fachwerk ist dabei so eingerichtet dass es den Lastpfad im Knotenelement unterstützt.

Auf diese Weise ist es möglich mit Hilfe relativ einfach herzustellender und leichter Knotenelemente eine äußerst stabile und tragfähige Tragstruktur für ein Kraftfahrzeug aufzubauen.

Die Herstellung einer erfindungsgemäßen Tragstruktur umfasst den Verfahrensschritt, dass die Knotenelemente mit deren flächigen Stegen durch Strangpressen, Fließpressen oder Strangziehen gebildet werden. So können mehrere gleichartige Knotenelemente beispielsweise durch Drücken oder Ziehen des Materials durch eine Matrix und einfaches Ablängen, also Abschneiden der Knotenelemente hergestellt werden.

Weiterbildungen der Erfindung sind in den abhängigen Ansprüchen, der Beschreibung sowie den beigefügten Zeichnungen angegeben.

Bevorzugt wird eine Aufnahme von zumindest einem der Knotenelemente in Fahrzeughochrichtung durch die flächigen Stege gebildet.

Besonders bevorzugt sind die flächigen Stege, welche die Aufnahme bilden, zu zumindest einer Wand des darin befestigten Hohlprofils parallel und beidseitig benachbart angeordnet. Die flächigen Stege der Knotenelemente können in diesem Fall auch dazu genutzt werden Aufnahmen für die Hohlprofile zu bilden, und dabei vorzugsweise zu beiden Seiten der Hohlprofilwände angeordnet sein um diese beidseits zu stützen.

Insbesondere kann zwischen den flächigen Stegen, welche zu zumindest einer Wand des darin befestigten Hohlprofils parallel und beidseitig benachbart angeordnet sind, Klebstoff eingebracht sein. Die flächigen Stege bilden dann einen Bereich der mit Klebstoff gefüllt werden kann, um die Hohlprofile an die Knotenelemente zu kleben.

Besonders bevorzugt ist an den Knotenelementen in Fahrzeughochrichtung oben und/oder unten jeweils ein Deckel befestigt. Der Deckel dient einerseits zur Strukturversteifung und bildet andererseits zusätzliche Flächen zur Verklebung von aufgenommenen Hohlprofilen.

Gemäß einer Ausführungsform ist zumindest in einer Aufnahme eines der Knotenelemente ein Kern angeordnet, wobei der Kern zumindest eine Begrenzungsfläche aufweist, die zumindest zu einer Wand, bevorzugt mehrere Begrenzungsflächen die zu allen Wänden, des darin befestigten Hohlprofils im Wesentlichen parallel und von innen benachbart angeordnet ist. Ein derartiger Kern ist also in einem Aufnahmebereich eines Knotenelementes mit einem Abstand zu den flächigen Stegen des Knotenelementes angeordnet, so dass auf den Kern ein Hohlprofil aufgesteckt sein kann, dessen Wände zwar außerhalb des Kerns, jedoch innerhalb der flächigen Stege des Knotenelements liegen. Der Kern bildet somit weitere Flächen zum Befestigen, insbesondere Kleben, des Hohlprofils in dessen Aufnahme im Knotenelement und bildet dadurch vorzugsweise den inneren Abschluss eines Klebebades. Die Begrenzungsflächen sind "im Wesentlichen parallel", da die Begrenzungsflächen auch unstetig ausgebildet sein können bzw. auch eine leicht konische Form oder eine poröse/löchrige Oberfläche aufweisen können.

Bevorzugt weist der Kern einen Bund auf, der in das Knotenelement geklemmt ist. Durch den Bund ist der Kern zumindest während der Befestigung des Hohlprofils im Knotenelement festlegbar und kann, je nach Anforderungen, auch nach der Herstellung der Tragstruktur über den Bund befestigt bleiben.

Der Kern wird bevorzugt als Blähformteil ausgeführt, welcher sich nach dem Aushärten des Kleberbades mittels Temperatur in seinem Volumen ausdehnt und so akustisch Vorteile bringt. Somit bildet der Kern im kalten Zustand den Abschluss bzw. die Begrenzung für das Kleberbad und kommt es durch Aufbringung der zur Aushärtung notwendigen Erhitzung auf Grund von Expansion des Kernes (Blähformteil bzw. Schaum) zu einer Schallabdichtung des Hohlprofiles.

Nach einer Ausführungsform ist zumindest eines der Knotenelemente aus zumindest zwei Knotenelementteilen zusammengefügt. Dabei muss zumindest eines der Knotenelementteile, bevorzugt alle Knotenelementteile, eine erfindungsgemäße Fachwerkstruktur aufweisen um die Tragfähigkeit des Knotenelementes zu gewährleisten. Die Herstellung des Knotenelementes kann auf diese Weise durch kleinere und einfachere Geometrien vereinfacht werden. Auch kann ein derart zusammengesetztes Knotenelement reparaturfreundlicher sein.

Bevorzugt sind bei zusammengesetzten Knotenelementen die Knotenelementteile mittels Schwalbenschwanzverbindung bzw. Schwalbenschwanzähnlichen Verbindungen aneinander befestigt. Die befestigten Flächen können beispielsweise geklebt sein.

Die Hohlprofile einer erfindungsgemäßen Tragstruktur können insbesondere zwei A-Säulen umfassen. Hiermit kann eine dreidimensionale Tragstruktur für ein Kraftfahrzeug geschaffen werden.

Die Hohlprofile können weiters zwei B-Säulen und/oder zwei Schweller und/oder zwei Querträger und/oder zwei vordere Längsträger und/oder zwei hintere Längsträger umfassen.

Bevorzugt ist zumindest eines der Hohlprofile als Verband mehrerer Strangpressprofile, insbesondere mit einem Rohr, ausgebildet. Beispielsweise können A-Säulen und/oder Längsträger als Rohr ausgebildet sein, dass zwischen mehreren Strangpressprofilen geklemmt und verklebt ist. Die Strangpressprofile untereinander können ebenfalls geklebt und beispielsweise zusätzlich durch Schrauben, Rührreibschweißen oder Flowdrillen (Fließbohren) verbunden sein.

Bevorzugt weist zumindest eines der Hohlprofile ein Profil auf, dass zum Einschuhen eines zweiten Hohlprofils oder Knotenelements ausgebildet ist. Durch das Einschuhen eines zweiten Hohlprofils oder Knotenelements in ein geeignet ausgebildetes Profil eines Hohlprofils wird das Verschieben eines Klebstoffes an den Kontaktflächen weitgehend verhindert.

Bevorzugt bestehen die Knotenelemente und die Hohlprofile aus Faserverbundmaterial, Aluminium oder Stahl. Knotenelemente aus Faserverbundmaterial sind bevorzugt durch Strangziehen (Pultrusion) hergestellt, Knotenelemente aus Aluminium oder Stahl sind bevorzugt durch Strangpressen oder Fließpressen hergestellt.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung eines Knotenelementes einer erfindungsgemäßen Tragstruktur.
- Fig. 2a,b,c: sind zweidimensionale Darstellungen bzw. Ausschnitte gemäß Fig. 1 von oben.
- Fig. 3: ist eine Darstellung gemäß Fig. 2a, jedoch mit befestigten Hohlprofilen.
- Fig. 4: sind weitere Beispiele erfindungsgemäßer Knotenelemente gemäß Fig. 1, jedoch mit Deckel.
- Fig. 5: ist eine erfindungsgemäße Tragstruktur eines Kraftfahrzeuges von oben (untere Darstellung) und von der Seite (obere Darstellung).
- Fig. 6a,b,c: sind Teildarstellungen des Verbindungsbereiches von oben, gemäß Fig. 3.
- Fig. 7a,b: sind weitere Darstellungen des Verbindungsbereiches entsprechend Fig. 6, jedoch dreidimensional (Fig. 7a) bzw. von der Seite (Fig. 7b).
- Fig. 8a,b: sind Darstellungen einer weiteren Ausführungsform eines Knotenelementes gemäß Fig. 3 von oben (Fig. 8a) und eines Ausschnitts dazu von der Seite (Fig. 8b).
- Fig. 9a,b: sind Darstellungen eines Verbindungsbereiches zwischen Hohlprofil und Knotenelement von der Seite.
- Fig. 10a,b,c: sind Darstellungen eines Verbindungsbereiches zwischen Hohlprofil und Knotenelement von der Seite bzw. als Schnitt.
- Fig. 11a,b: ist eine dreidimensionale Darstellung und eine Draufsicht auf ein zum Einschuhen geeignetes Hohlprofil
- Fig. 12a,b,c,d: sind Darstellungen von Verfahrensschritten zum Einschuhen eines weiteren Hohlprofils (Längsprofil) in ein Hohlprofil (Querprofil)
- Fig. 13a,b: ist eine dreidimensionale Darstellung und eine Draufsicht auf ein Hohlprofil als Verband mehrerer Strangpressprofile.

### Detaillierte Beschreibung der Erfindung

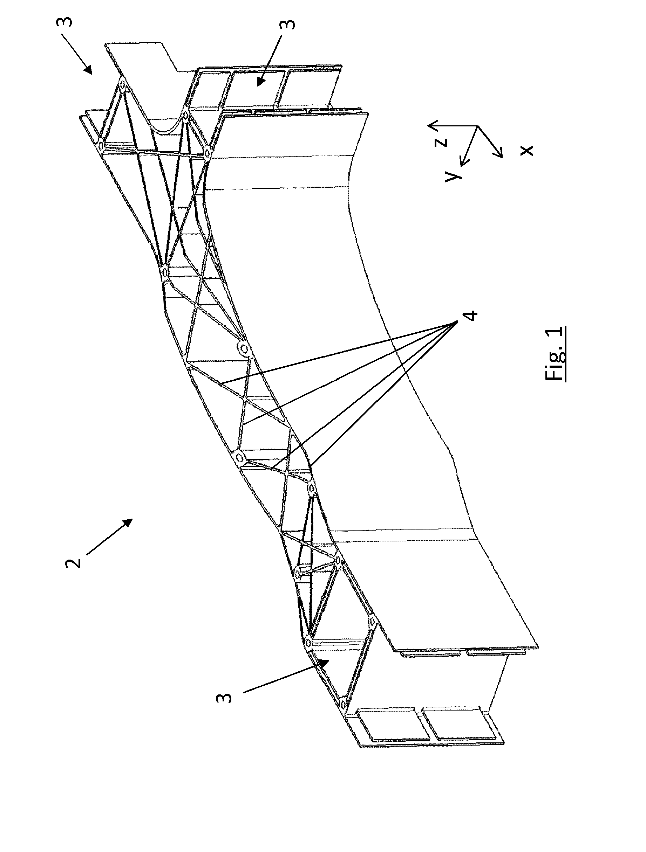

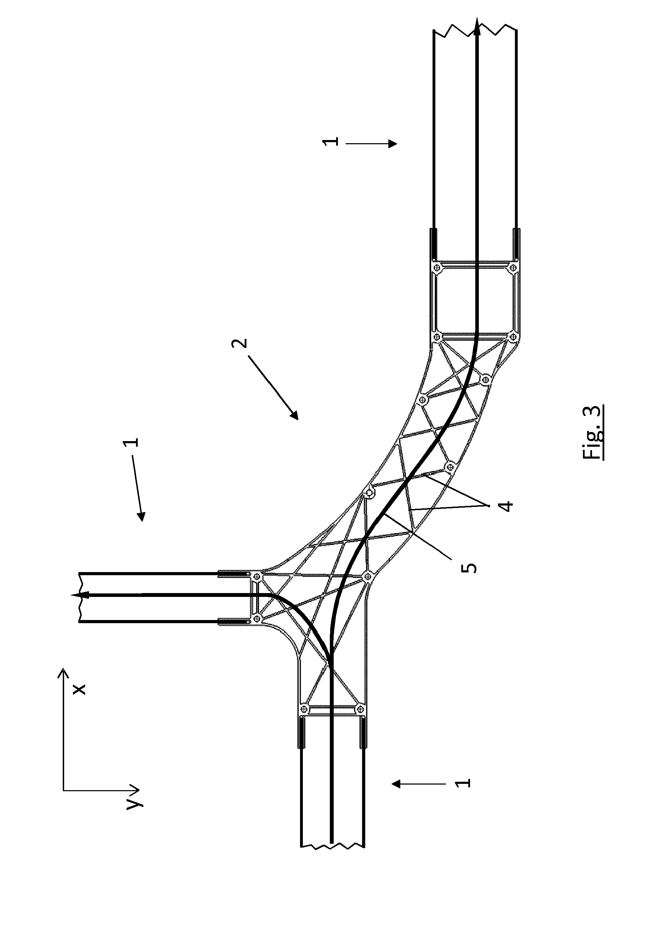

In Fig. 1 ist ein Knotenelement 2 einer erfindungsgemäßen Tragstruktur eines Kraftfahrzeuges dargestellt, wobei das Knotenelement 2 ein Strangpress- oder Fließpress- oder Strangziehteil ist, mit jeweils einer Vielzahl von flächigen Stegen 4 in Fahrzeughochrichtung z, wobei einige der flächigen Stege 4 eine Fachwerkstruktur ausbilden, die den Lastpfad 5, siehe Fig. 3, im Knotenelement 2 unterstützt. Zusätzlich zur Fachwerkstruktur im Inneren des Knotenelements 2 bilden die flächigen Stege 4 auch die seitlichen Begrenzungen des Knotenelements 2, sowie Aufnahmen 3, zur Aufnahme von Hohlprofilen 1, siehe z.B. Fig. 3. Das dargestellte Knotenelement 2 kann in einer Tragstruktur eines Kraftfahrzeuges beispielsweise baugleich als linkes und rechtes Knotenelement in der Tragstruktur, mit einer selben Strangpressmatrize hergestellt und gespiegelt bearbeitet, verwendet werden.

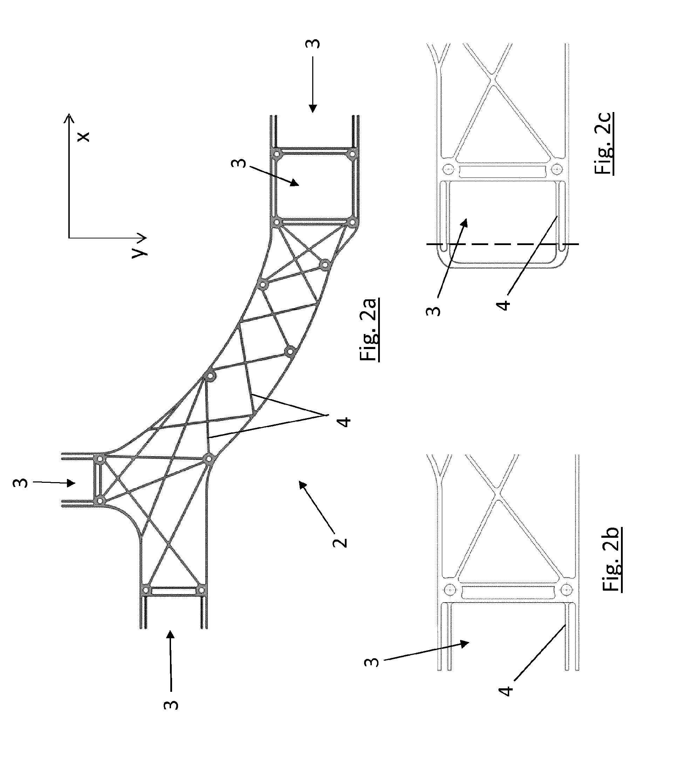

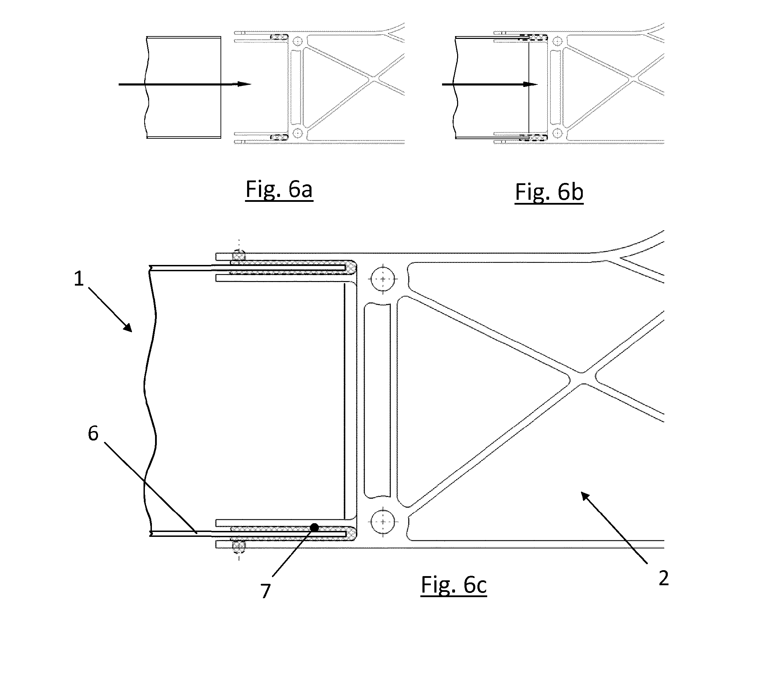

In Fig. 2a-c ist das Knotenelement 2 der Fig. 1 in einem zweidimensionalen Schnitt dargestellt. Die Aufnahmen 3 werden durch die flächigen Stege 4 des Knotenelements 2 gebildet, wobei jeweils zwei flächige Stege 4 dazu eingerichtet sind, Wände 6 eines darin befestigten Hohlprofils 1 parallel und beidseitig benachbart zu umgreifen, siehe dazu auch Fig. 6c. Zwischen den parallelen und benachbarten flächigen Stegen 4 ist jeweils ein Raum der zur Befestigung der Hohlprofile 1 mit Klebstoff 7 ausgefüllt sein kann, siehe Fig. 6c. Die parallelen und benachbarten flächigen Stegen 4 können entweder schon beim Strangpressen des Bauteiles freistehend ausgeführt sein, Fig. 2b, oder auch zunächst durch einen Verbindungssteg verbunden sein, welcher nach dem Strangpressen entfernt wird, Fig. 2c. Durch das nachträgliche Entfernen des Verbindungssteges können an der Fügestelle bessere Toleranzwerte erreicht werden.

In Fig. 3 sind in das dargestellte Knotenelement 2 auch Hohlprofile 1 in die Aufnahmen 3 des Knotenelements 2 eingesteckt und bevorzugt verklebt. Die flächigen Stege 4 sind so ausgelegt, dass sie den Lastpfad 5 im Knotenelement 2 unterstützen.

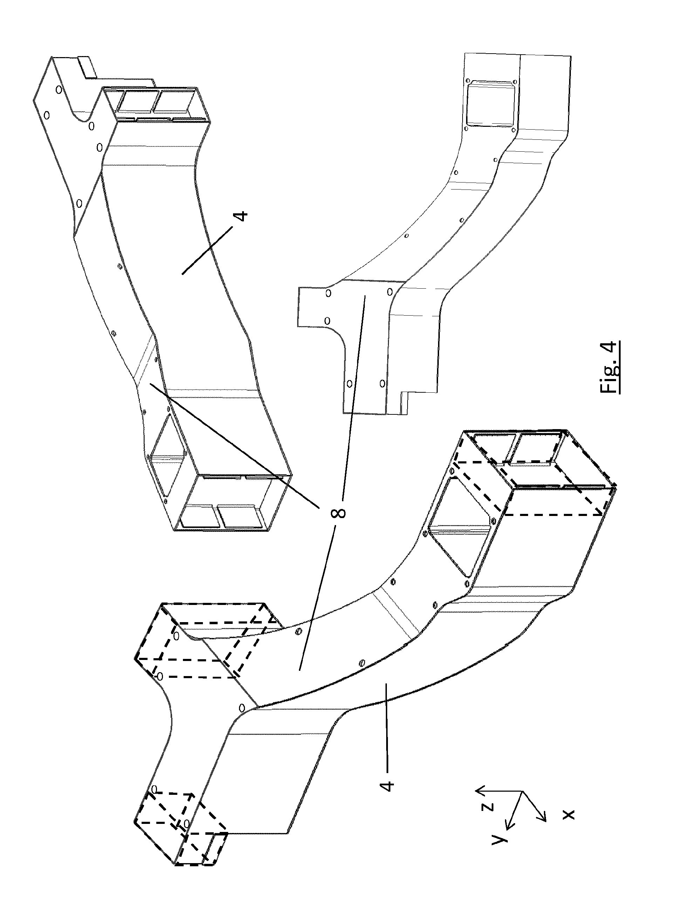

Wie in Fig. 4 ersichtlich können erfindungsgemäße Knotenelemente 2 in verschiedener Form verwendet werden, insbesondere für verschiedene Positionen innerhalb einer Tragstruktur. Normal auf die flächigen Stege 4 sind an der Oberseite und/oder an der Unterseite des Knotenelements in Fahrzeughochrichtung z Deckel 8 befestigt, beispielsweise durch sog. Flow-Drill durch Kernbohrungen des Strangpressknotens. Durch die Deckel 8 werden auch die Aufnahmen 3 abgeschlossen, zur Aufnahme eines Kleberbades zur Befestigung der Hohlprofile 1.

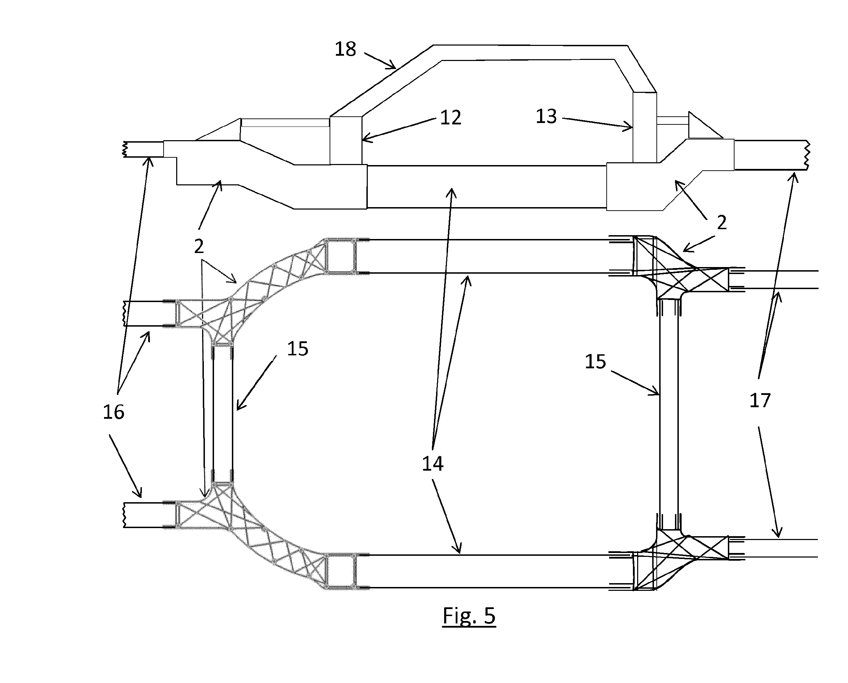

Eine komplette Tragstruktur eines Kraftfahrzeuges ist in Fig. 5 in Ansicht von oben (unten im Bild) und von der Seite (oben im Bild) dargestellt, wobei vordere und hintere jeweils rechte und linke Knotenelemente 2 zur Verbindung von Hohlprofilen 1 verwendet werden. Die Hohlprofile 1 sind dabei zwei A-Säulen 12, zwei B-Säulen 13, zwei Schweller 14, zwei Querträger 15, zwei vordere Längsträger 16 und zwei hintere Längsträger 17. Dabei werden die Schweller 14, Querträger 15 und Längsträger 16, 17 im Wesentlichen in einer Ebene angeordnet und die A-Säulen 12 und B-Säulen 13 im Wesentlichen senkrecht zu dieser Ebene angeordnet, wie insbesondere in Fig. 5 oben, in seitlicher Ansicht, ersichtlich.

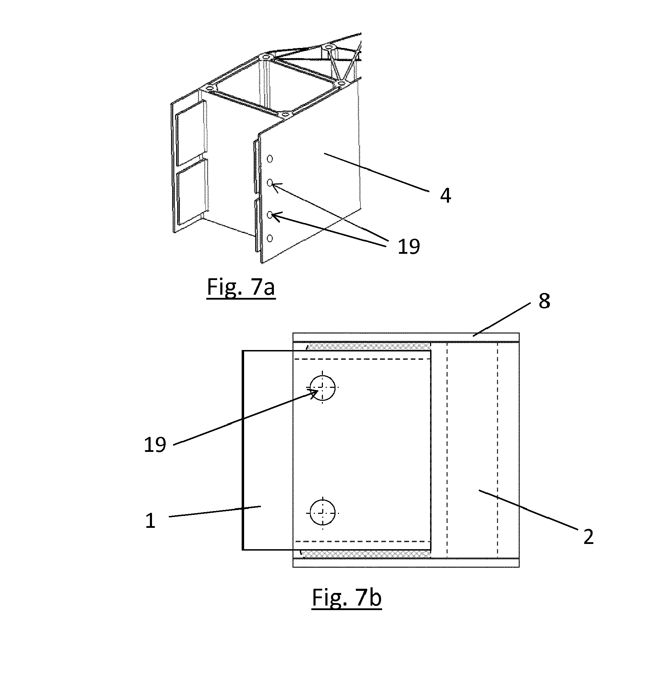

Die Verbindung zwischen Hohlprofil 1 und Knotenelement 2 wird insbesondere in den Fig. 6 und Fig. 7 näher dargestellt. Ein Kleberbad wird in die Aufnahme 3 des Knotenelements 2 eingespritzt (Fig. 6a) und in Folge das Hohlprofil 1 in den Aufnahmebereich eingeschoben (Fig. 6b), so dass dabei der Klebstoff 7 verdrängt wird und die Wand 6 des befestigten Hohlprofils 1 von beiden Seiten benetzt (Fig. 6c). Durch den Austritt von Klebstoff 7 aus Kontrollbohrungen 19, siehe Fig. 7a und 7b, kann festgestellt werden, ob das Bauteil ausreichend benetzt wurde und die Klebeverbindung in Ordnung ist.

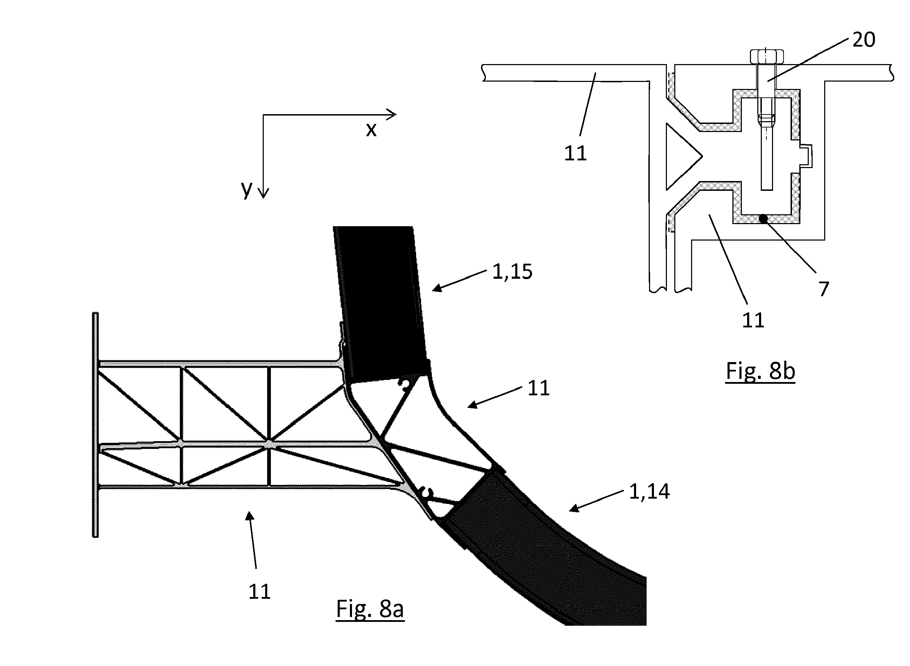

Wie in Fig. 8a ersichtlich, kann ein Knotenelement 2 auch aus mehreren Knotenelementteilen 11 aufgebaut sein, wobei dann jedes einzelne Knotenelementteil 11 eine erfindungsgemäße Fachwerkstruktur aus flächigen Stegen 4 aufweist, zur Unterstützung des Lastpfades im jeweiligen Knotenelementteil 11. Ein derartiger Aufbau aus mehreren Knotenelementteilen 11 kann einfacher herstellbar und reparaturfreundlicher sein. Die in Fig. 8a dargestellten Hohlprofile 1 können beispielsweise ein Querträger 15 und ein Schweller 14 sein. Die Verbindung der Knotenelementteile 11 ist auf vielfältige Weise denkbar, wie etwa durch Kleben, Schrauben, Reibrührschweißen etc. Die Knotenelementteile 11können, wie in Fig. 8b gezeigt, beispielsweise mittels einer Schwalbenschwanzverbindung miteinander verbunden sein, wobei in Klebespalten Klebstoff 7 eingebracht sein kann und die Bauteile zumindest während der Klebung mit einer Fixierschraube 20 in Position gehalten werden können.

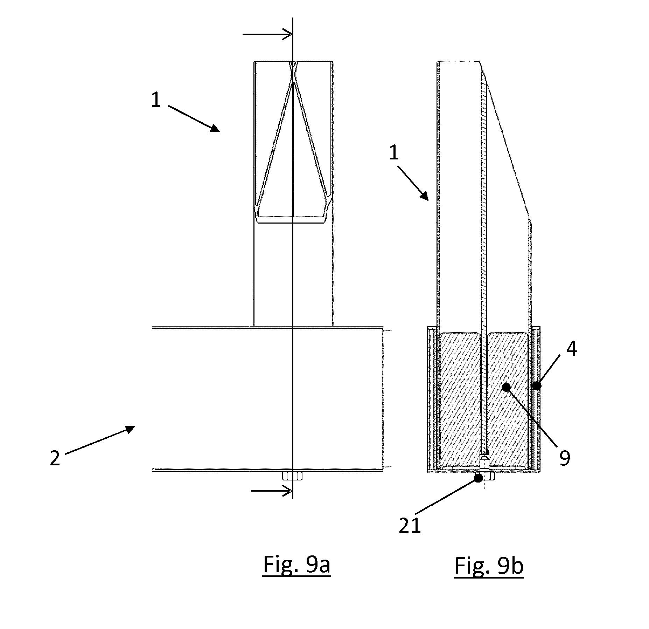

Zur Verklebung zwischen einem Knotenelement 2 und einem Hohlprofil 1 kann es hilfreich sein, zusätzliche Seitenwände zu schaffen, um weitere vordefinierte Räume für ein Kleberbad bereitzustellen. Diese zusätzlichen Wände können, siehe Fig. 9a und b, durch einen Kern 9 gebildet werden, der zumindest zu einer Wand 6, am besten zu allen Wänden 6, des darin befestigten Hohlprofils 1 im Wesentlichen parallel und von innen benachbart angeordnet ist. Der Kern 9 wird so im Inneren des Knotenelements 2 angeordnet, dass zwischen Kern 9 und einem oder mehreren flächigen Stegen 4 ein Aufnahmeraum für Klebstoff 7 und für eine bzw. mehrere Wände 6 des zu befestigenden Hohlprofils 1 geschaffen werden. Der Kern 9 kann beispielsweise nur während der Klebung durch eine Zentrierschraube 21 am unteren Deckel 8 des Knotenelements 2 fixiert sein.

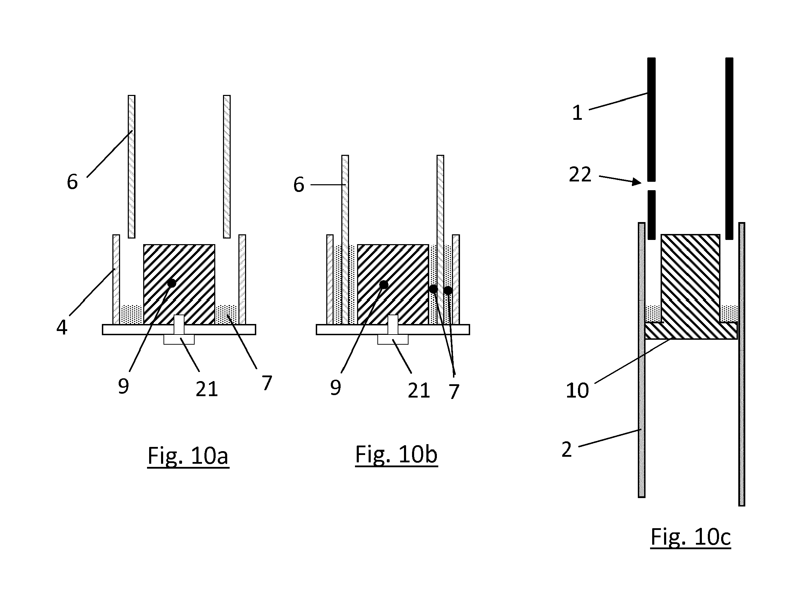

Der Kern 9 kann alternativ oder zusätzlich auch so ausgebildet sein, dass er einen Bund 10 aufweist, der mit leichtem Übermaß in das Knotenelement 2, oder auch in ein Basis-Hohlprofil, geklemmt ist (siehe Fig. 10c). Auf diese Weise wird wieder, durch die Seitenwände und den Bund 10 des Kerns 9, ein Raum für eine Kleberfüllung geschaffen, so dass das zu befestigende Hohlprofil 1 in das Kleberbad eingetaucht werden kann. Eine Bohrung 22 im Hohlprofil 1 ermöglicht den Durchtritt von Klebstoff 7 für besseren Halt des Hohlprofils 1.

Wichtige Funktion des Kernes 9 ist es auch hier, den inneren Abschluss des Kleberbades zu bilden. Weiters quillt der Klebstoff 7 durch das Hineindrücken des Hohlprofiles 1 bzw. dessen Wand 6 in das Knotenelement 2, bedingt durch den Kern 9, nach oben bzw. an oder über den oberen Rand der Enden der Knotenelemente 2, wodurch kontrolliert werden kann, dass genügend Klebstoff 7 vorhanden war bzw. sich der Klebstoff 7 auch über die gesamte Verbindungsfläche verteilt hat.

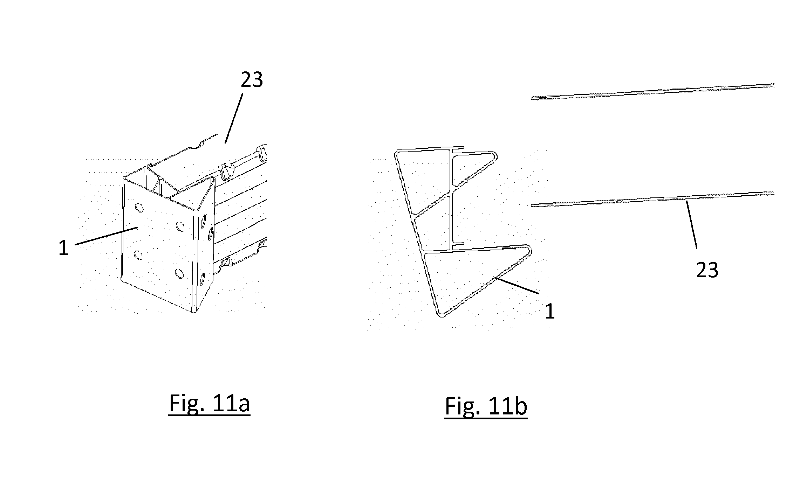

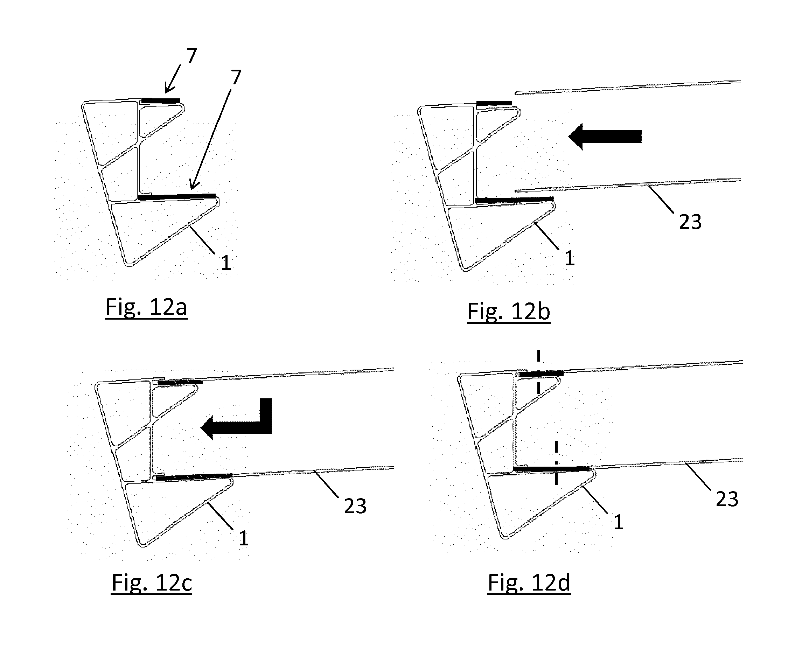

In Fig. 11a ist eine dreidimensionale Darstellung und in Fig. 11b eine Draufsicht auf ein zum Einschuhen geeignetes Hohlprofil 1 (jeweils links in den Abbildungen) dargestellt. Ein zweites Hohlprofil 23 (Längsprofil, rechts in den Abbildungen) wird in das erste Hohlprofil 1 (Querprofil) eingeschuht, wie in den Verfahrensschritten der Figuren 12 a bis d zu erkennen. Wie in Fig. 12a dargestellt wird zunächst Strukturkleber 7 auf das erste Hohlprofil 1 aufgetragen. Beabstandet zu diesem ersten Hohlprofil 1 wird dann ein zweites Hohlprofil 23 der vorgesehenen Kontaktfläche entlang angenähert, ohne jedoch den Klebstoff 7 dabei zu berühren und dadurch zu verschieben. Erst im Schritt der Fig. 12c wird das Längsprofil 23 soweit erforderlich auf die Kontakfläche aufgestezt (Pfeilrichtung), um es in die Nut des Querprofils 1 zu schieben. Wie in Fig. 12d dargestellt, besteht die Möglichkeit zusätzlich zum Klebstoff 7 beispielsweise Schrauben, Stanznieten und ähnliches als Verbindungshilfen an den mit strichlierten Linien gekennzeichneten Positionen einzusetzen.

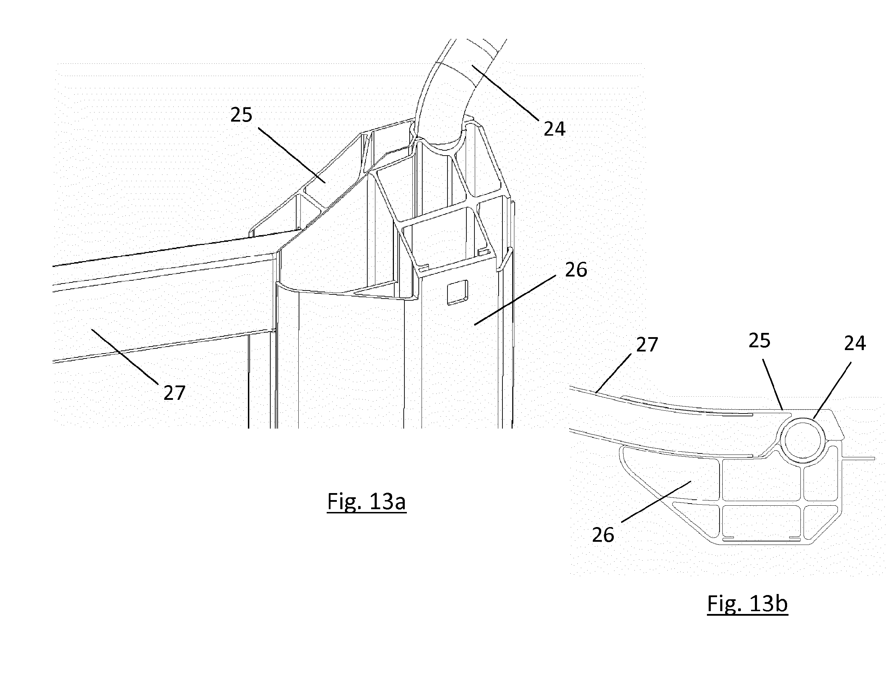

Fig. 13a,b ist eine dreidimensionale Darstellung und eine Draufsicht auf ein Hohlprofil 1, welches als Verband mehrerer Strangpressprofile ausgebildet ist. Dabei ist ein Versteifungsrohr 24 zwischen ein inneres Strangpressprofil 25 (innere A-Säule) und ein äußeres Strangpressprofil 26 (äußere A-Säule) geklemmt. Ein vorderer Stützträger 27 ist mit dem Strangpressprofilverbund verbunden.

**Bezugszeichenliste**

| | |
|---|---|
| 1 | Hohlprofil |
| 2 | Knotenelement |
| 3 | Aufnahme |
| 4 | flächige Stege |
| 5 | Lastpfad |
| 6 | eine Wand des befestigten Hohlprofils |
| 7 | Klebstoff |
| 8 | Deckel |
| 9 | Kern |
| 10 | Bund |
| 11 | Knotenelementteil |
| 12 | A-Säule |
| 13 | B-Säule |
| 14 | Schweller |
| 15 | Querträger |
| 16 | vordere Längsträger |
| 17 | hintere Längsträger |
| 18 | Dach |
| 19 | Kontrollbohrung |
| 20 | Fixierschraube |
| 21 | Zentrierschraube |
| 22 | Bohrung |
| 23 | zweites Hohlprofil |
| 24 | Versteifungsrohr |
| 25 | inneres Strangpressprofil |
| 26 | äußeres Strangpressprofil |
| 27 | vorderer Stützträger |
| | |
| x | Fahrzeuglängsrichtung |
| y | Fahrzeugquerrichtung |
| z | Fahrzeughochrichtung |

## Patentansprüche

1. Tragstruktur eines Kraftfahrzeuges umfassend Hohlprofile (1) und Knotenelemente (2), wobei die Knotenelemente (2) zur Verbindung der Hohlprofile (1) eingerichtet sind, wobei die Hohlprofile (1) in Aufnahmen (3) der Knotenelemente (2) befestigt sind,
**dadurch gekennzeichnet, dass** die Knotenelemente (2) Strangpress- oder Fließpress- oder Strangziehteile sind, mit jeweils einer Vielzahl von flächigen Stegen (4) in Fahrzeughochrichtung (z), wobei zumindest einige der flächigen Stege (4) eine Fachwerkstruktur ausbilden, die den Lastpfad (5) im jeweiligen Knotenelement (2) unterstützt.

2. Tragstruktur nach Anspruch 1,
**dadurch gekennzeichnet, dass** zumindest eine Aufnahme (3) von zumindest einem der Knotenelemente (2) in Fahrzeughochrichtung (z) durch die flächigen Stege (4) gebildet wird.

3. Tragstruktur nach Anspruch 2,
**dadurch gekennzeichnet, dass** die flächigen Stege (4), welche die Aufnahme (3) bilden, zu zumindest einer Wand (6) des darin befestigten Hohlprofils (1) parallel und beidseitig benachbart angeordnet sind.

4. Tragstruktur nach Anspruch 3,
**dadurch gekennzeichnet, dass** zwischen den flächigen Stegen (4), welche zu zumindest einer Wand (6) des darin befestigten Hohlprofils (1) parallel und beidseitig benachbart angeordnet sind, Klebstoff (7) eingebracht ist.

5. Tragstruktur nach zumindest einem der vorhergehenden Ansprüche,
**dadurch gekennzeichnet , dass** an den Knotenelementen (2) in Fahrzeughochrichtung (z) oben und/oder unten jeweils ein Deckel (8) befestigt ist.

6. Tragstruktur nach zumindest einem der vorhergehenden Ansprüche,
**dadurch gekennzeichnet , dass** zumindest in einer Aufnahme (3) eines der Knotenelemente (2) ein Kern (9) angeordnet ist, wobei der Kern zumindest eine Begrenzungsfläche aufweist, die zumindest zu einer Wand (6), bevorzugt mehrere Begrenzungsflächen die zu allen Wänden (6), des darin befestigten Hohlprofils (1) im Wesentlichen parallel und von innen benachbart angeordnet ist.

7. Tragstruktur nach Anspruch 6,
**dadurch gekennzeichnet, dass** der kern (9) den inneren Abschluss eines Kleberbades bildet.

8. Tragstruktur nach Anspruch 6 oder 7,
**dadurch gekennzeichnet, dass** der kern (9) ein Vollkörper ist, insbesondere aus Aluminium oder aus Schaummaterial.

9. Tragstruktur nach Anspruch 6 oder 7,
**dadurch gekennzeichnet, dass** der kern (9) ein Blähformteil ist bzw. aus Schaummaterial besteht, welches sich durch Erhitzung ausdehnt und so zu einer Schallabdichtung des Hohlprofiles führt.

10. Tragstruktur nach zumindest einem der Ansprüche 6 bis 9,
**dadurch gekennzeichnet, dass** der kern (9) einen Bund (10) aufweist, der in das Knotenelement (2) geklemmt ist.

11. Tragstruktur nach zumindest einem der vorhergehenden Ansprüche,
**dadurch gekennzeichnet , dass** zumindest eines der Knotenelemente (2) aus zumindest zwei Knotenelementteilen (11) zusammengefügt ist.

12. Tragstruktur nach Anspruch 11,
**dadurch gekennzeichnet, dass** die Knotenelementteile (11) mittels Schwalbenschwanzverbindung oder Schwalbenschwanz-ähnlicher Verbindung aneinander befestigt sind.

13. Tragstruktur nach zumindest einem der vorhergehenden Ansprüche,
**dadurch gekennzeichnet, dass** die Hohlprofile (1) zwei A-Säulen (12) und / oder zwei B-Säulen (13) und/ oder zwei Schweller (14) und/ oder zwei Querträger (15) und/ oder zwei vordere Längsträger (16) und/ oder zwei hintere Längsträger (17) umfassen.

14. Tragstruktur nach zumindest einem der vorhergehenden Ansprüche,
**dadurch gekennzeichnet, dass** die Knotenelemente (2) aus Faserverbundmaterial, Aluminium oder Stahl bestehen.

15. Tragstruktur nach zumindest einem der vorhergehenden Ansprüche,
**dadurch gekennzeichnet , dass** zumindest eines der Hohlprofile (1) als Verband mehrerer Strangpressprofile, insbesondere mit einem Rohr, ausgebildet ist.

16. Tragstruktur nach zumindest einem der vorhergehenden Ansprüche,
**dadurch gekennzeichnet , dass** zumindest eines der Hohlprofile (1) ein Profil aufweist, dass zum Einschuhen eines zweiten Hohlprofils (23) oder Knotenelements (2) ausgebildet ist.

17. Verfahren zur Herstellung einer Tragstruktur nach zumindest einem der vorhergehenden Ansprüche,
**dadurch gekennzeichnet, dass** die Knotenelemente (2) mit deren flächigen Stegen (4) durch Strangpressen, Fließpressen oder Strangziehen gebildet werden.
